# EUROPÄISCHE PATENTANMELDUNG

(11) **EP 2 428 790 A1**
(43) Veröffentlichungstag der Anmeldung: **14.03.2012**
(21) Anmeldenummer: 11179709.8
(22) Anmeldetag: 01.09.2011
(51) Int. Cl.: G01N 1/22, F01N 13/00

(54) **Abgassonde**

(30) Priorität: 13.09.2010 DE 102010040672
(71) Anmelder: MAHA Maschinenbau Haldenwang GmbH & Co. KG, 87490 Haldenwang (DE)
(72) Erfinder: Roll, Bernhard, 87654 Friesenried (DE); Can, Erkan, 87435 Kempten (DE); Tschinkel, Elmar, 87448 Waltenhofen (DE); Knox, Gunther, 87781 Ungerhausen (DE)
(74) Vertreter: MERH-IP Matias Erny Reichl Hoffmann

(57) **Zusammenfassung**

Die Erfindung betrifft eine Abgassonde, insbesondere eine Abgassonde zur Bestimmung von Abgaskomponenten im Abgas von Verbrennungsmotoren, mit einem Befestigungsmittel, das eine schnelle und sichere Befestigung der Abgassonde an unterschiedlichen Auspuffrohren ermöglicht. Die Abgassonde umfasst ein Abgassondenrohr 10, eine Klemmzange mit einem ersten 20 und einem zweiten 30 Zangenschenkel zur Befestigung der Abgassonde 1 an einem Auspuffendrohr, wobei der erste Zangenschenkel 20 einen zweifach gekanteten Frontabschnitt 21 aufweist, der im geklemmten Zustand in Kontakt mit dem Auspuffendrohr steht.

## Beschreibung

Die Erfindung betrifft eine Messgassonde, insbesondere eine Abgassonde eines Abgasmessgeräts, mit einem Befestigungsmittel, das eine schnelle und feste Fixierung der Abgassonde an unterschiedlichen Auspuffendrohren ermöglicht.

Aus dem Stand der Technik sind Messgeräte zur Abgasmessung von Kraftfahrzeugen bekannt, die zur Prüfung und Diagnose von Kraftfahrzeugabgasen eingesetzt werden. Eine Abgassonde, die in das Auspuffrohr des zu untersuchenden Fahrzeugs eingebracht wird, leitet das Abgas an das Messgerät weiter um beispielsweise den Anteil der Gase CO, CO₂, HC, O₂. NO oder die Opazität oder Massenkonzentration im Fahrzeugabgas zu messen. Hierfür ist es notwendig, die eingebrachte Abgassonde des Messgeräts am Auspuffrohr zu fixieren. Aus dem Stand der Technik sind Abgassonden bekannt, die mittels einer Rändelschraube an der Au-βenwand des Auspuffrohrs befestigt werden. Diese Befestigungsart hinterlässt jedoch häufig störende Spuren am Auspuff, insbesondere bei verchromten Auspuffrohren. Ein weiterer Nachteil ist, dass eine Rändelschraube oftmals den sehr heißen Auspufftemperaturen nicht standhält. Für Auspuffrohre, die in Verkleidungen integriert oder von Zierleisten umgeben sind, ist dieses Befestigungsmittel oftmals gänzlich ungeeignet.

Ein weiteres Problem ist, dass die Abgassonde sicher an Auspuffendrohren unterschiedlichster Bauart befestigt werden muss. Dies wird durch die zunehmende Vielfalt von Auspuffformen und -größen erschwert. Beispiele hierfür sind runde, viereckige oder dreieckige Auspuffformen, vom PKW zum LKW unterschiedliche Durchmesser der Auspuffrohre, sowie Auspuffendrohre mit und ohne Umbördelung oder Verkleidung.

Es ist deshalb eine Aufgabe der vorliegenden Erfindung, eine Abgassonde, insbesondere eine Abgassonde zur Bestimmung von Abgaskomponenten im Abgas von Kraftfahrzeugen, bereitzustellen, die schnell und zuverlässig an Auspuffendrohren unterschiedlicher Bauart befestigt werden kann. Diese Aufgabe wird durch eine Abgassonde gemäß den Merkmalen des Patentanspruchs 1 gelöst. Die abhängigen Patentansprüche betreffen vorteilhafte Ausgestaltungen der Erfindung.

Die erfindungsgemäße Abgassonde verfügt über ein Abgassondenrohr zur Aufnahme des Abgases im Auspuff und eine Klemmzange mit einem ersten und einem zweiten Zangenschenkel zur Befestigung der Abgassonde am Auspuffendrohr. Vorzugsweise sind die ersten und zweiten Zangenschenkel durch Federwirkung gegeneinander verspannbar und drehgelenkig verbunden. Der erste Zangenschenkel der Klemmzange weist erfindungsgemäß einen zweifach gekanteten Frontabschnitt auf, der im geklemmten Zustand in Kontakt mit dem Auspuffrohr steht. Vorzugsweise ist dieser zweifach gekantete Frontabschnitt stufenförmig ausgebildet. Weiterhin kann der zweifach gekantete Frontabschnitt mit dem Abgassondenrohr und einem Frontabschnitt des zweiten Zangenschenkels einen Hohlraum bilden und einen ersten Teilabschnitt umfassen, der im geklemmten Zustand in Kontakt mit dem Auspuffendrohr steht.

Die erfindungsgemäße Doppelkantung der Klemmzange ermöglicht eine schnelle und sichere Befestigung der Abgassonde an Auspuffendrohren unterschiedlichster Bauart. Bei Auspuffendrohren mit Umbördelung kann die Doppelkantung die Umbördelung vorteilhafterweise umgreifen oder aufnehmen, um den Zangenschenkel mit Doppelkantung am Auspuffendrohr zu befestigen. Vorzugsweise ist der erste Teilabschnitt, der im geklemmten Zustand in Kontakt mit dem Auspuffendrohr steht, derart ausgebildet, dass er parallel zur Längsachse des Abgassondenrohrs verläuft. Dies erleichtert die Befestigung der Abgassonde bei Abgasendrohren, die von einer Verkleidung oder von Zierleisten umgeben sind, da dieser erste Teilabschnitt am Ende der Doppelkantung in den oft schmalen Zwischenbereich zwischen Verkleidung und Abgasrohr eingeschoben werden kann, um dort über den Klemmzangenmechanismus die Abgassonde am Abgasendrohr zu befestigen. Alle gängigen Auspuffrohre mit Verkleidung weisen einen Sicherheitsabstand zwischen Auspuffrohr und Verkleidung auf, aufgrund der hohen Hitzeentwicklung des Auspuffrohrs.

Weiterhin kann der zweifach gekantete Frontabschnitt derart ausgebildet sein, dass ein zweiter Teilabschnitt im Wesentlichen senkrecht an den ersten Teilabschnitt anschließt. Weiterhin kann ein dritter Teilabschnitt des zweifach gekanteten Frontabschnitts im Wesentlichen senkrecht zum zweiten und im Wesentlich parallel zum ersten Teilabschnitt verlaufen. Mit anderen Worten ergibt sich dadurch eine stufenförmige Form des zweifach gekanteten Frontabschnitts. Alternativ kann der zweifach gekantete Frontabschnitt auch Z-förmig oder spiegelverkehrt S-förmig ausgebildet sein.

Das Abgassondenrohr der Abgassonde ist vorzugsweise biegsam ausgebildet, um auch bei krummen Auspuffverläufen die Sonder sicher in das Auspuffrohr einbringen zu können. Weiterhin kann der zweite Zangenschenkel mit einem Aufnahmeelement in Verbindung stehen. In diesem Aufnahmeelement kann das Abgassondenrohr entlang seiner Längsrichtung beweglich in dem Aufnahmeelement gelagert sein. Dies ermöglicht nach Befestigung der Abgassonde am Auspuffendrohr das kontrollierte Einbringen des Abgassondenrohrs in den Auspuff und das Einstellen der in den Auspuff ragenden Länge. Beispielsweise ist das Aufnahmeelement als Hohlzylinder ausgebildet oder als halber Hohlzylinder, in dem das Abgassondenrohr beweglich gelagert ist. Weiterhin können der erste und der zweite Zangenschenkel als Blechbiegeteile ausgebildet sein, um eine möglichst leichte und stabile Klemmzange zu ermöglichen.

Ein Frontabschnitt eines Zangenschenkels im Sinne dieser Erfindung ist der Endbereich des Zangenschenkels, der in der Nähe des Abgassondenrohrs bzw. des Auspuffendrohrs im befestigten Zustand liegt und nicht der Endbereich der Klemmzange, der von der Hand eines Nutzers beim Befestigungsvorgang umgriffen wird.

Zusammengefasst ermöglicht die Abgassonde mit der erfindungsgemäßen Klemmzange ein einhändiges, schnelles und sicheres Anbringen der Abgassonde an Auspuffrohren unterschiedlichster Bauart. Auch an Auspuffrohren mit Umbördelungen und an Auspuffrohren, die in eine Verkleidung integriert sind, kann die erfindungsgemäße Abgassonde problemlos befestigt werden. Weiterhin kann die Eindringtiefe der Abgassonde in das Auspuffrohr stufenlos variiert und eingestellt werden.

Bevorzuge Ausführungsformen der vorliegenden Erfindung werden im Folgenden beispielhaft und exemplarisch unter Bezugnahme auf die beigefügten Zeichnungen näher beschrieben.
- **Fig. 1A und Fig. 1B**: zeigen eine schematische Seiten- und Perspektivansicht eines Ausführungsbeispiels der erfindungsgemäßen Abgassonde;
- **Fig. 2**: zeigt eine schematische Perspektivansicht eines Ausführungsbeispiels eines erfindungsgemäßen ersten Zangenschenkels der Klemmzange der Abgassonde;
- **Fig. 3**: zeigt eine schematische Seitenansicht im Schnitt eines Ausführungsbeispiels der erfindungsgemäßen Abgassonde im befestigten Zustand an einen Auspuffendrohr mit Umbördelung; und
- **Fig. 4**: zeigt eine schematische Seitenansicht im Schnitt eines Ausführungsbeispiels der erfindungsgemäßen Abgassonde im befestigten Zustand an einem Auspuffendrohr, das von einer Verkleidung umgeben ist.

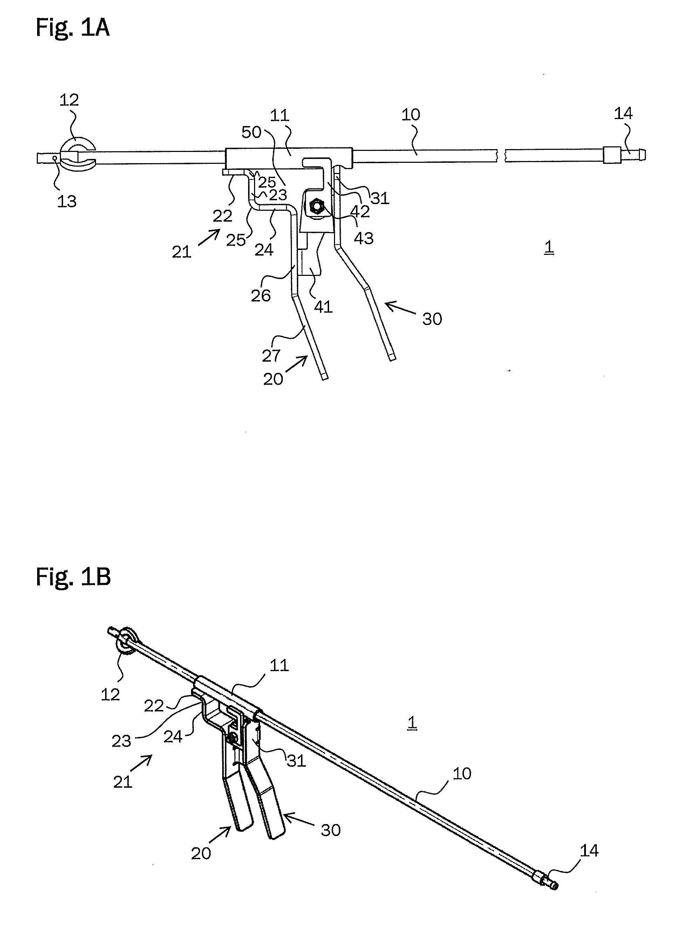

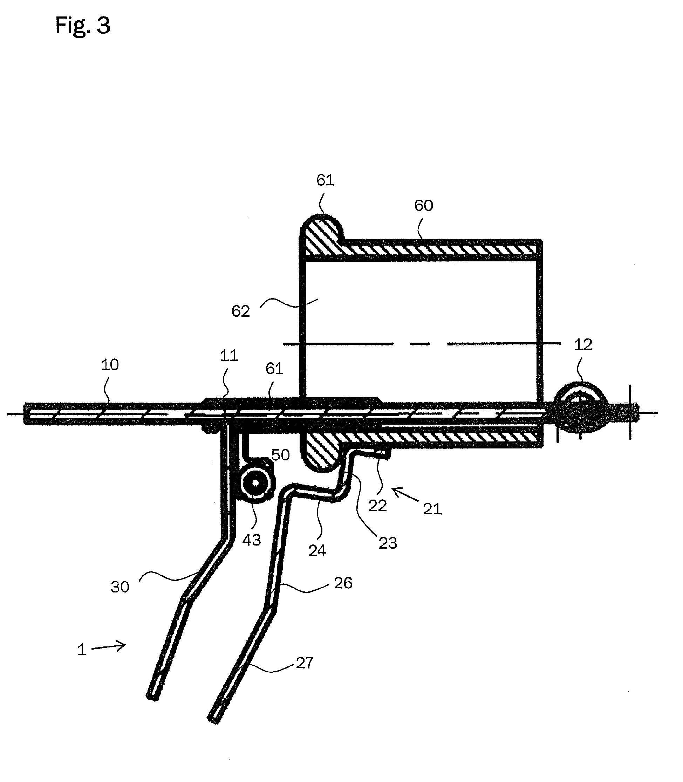

Fig. 1A zeigt eine schematische Seitenansicht eines Ausführungsbeispiels der erfindungsgemäßen Abgassonde. Die Abgassonde 1 umfasst ein biegsames Abgasrohr 10, das in einem hohlzylinderförmigen Aufnahmeelement 11 beweglich gelagert ist um die in den Auspuff ragende Länge des Sondenrohrs 10 einzustellen. Am vorderen Ende des Abgassondenrohrs befinden sich Öffnungen 13 zur Aufnahme des Messgases und ein Abstandshalter 12, um einen vorschriftsmäßigen Mindestabstand der Abgasöffnung 13 von der Außenfläche des Auspuffrohrs sicherzustellen. Am hinteren Ende des Abgassondenrohrs 10 befindet sich ein Anschluss 14, um das Abgassondenrohr an einen Schlauch (nicht gezeigt) anzuschließen, der das aufgenommene Abgas zu einem Abgasmessgerät (nicht gezeigt) weiterleitet. Die Abgassonde 1 verfügt weiterhin über eine Klemmzange mit einem ersten Zangenschenkel 20 und einem zweiten Zangenschenkel 30 zur Befestigung der Abgassonde 1 an einem Auspuffendrohr. Der erste Zangenschenkel 20 und der zweite Zangenschenkel 30 sind über ein Drehfedergelenk 43 gegeneinander verspannbar und drehgelenkig verbunden. Hierzu sind die zwei Zangenschenkel 20, 30 über zwei Verbindungselemente 41, 42 mit dem Drehfedergelenk 43 verbunden. Die Zangenschenkel 20, 30 sind als Blechbiegeteile hergestellt. Der erste Zangenschenkel 20 verfügt über einen zweifach gekanteten Frontabschnitt 21. In dem vorliegenden Ausführungsbeispiel ist die Zweifachkantung stufenförmig ausgebildet mit einem ersten Teilabschnitt 22, einem zweiten Teilabschnitt 23 und einem dritten Teilabschnitt 24, die jeweils über gekrümmte Verbindungsabschnitte 25 miteinander verbunden sind. Der erste 22 und der zweite 23 sowie der zweite 23 und der dritte 24 Teilabschnitt bilden jeweils einen rechten Winkel miteinander zur Ausbildung einer Doppelkante. Durch die erfindungsgemäße zweifache Kantung entsteht ein Hohlraum 50 zwischen dem zweifach gekanteten Frontabschnitt 21, dem Abgasrohr 10 bzw. der Aufnahme 11 und einem Frontabschnitt 31 des zweiten Zangenschenkels 30. Dieser vorteilhafte Hohlraum 50 ermöglicht das Umgreifen einer Auspuffendrohrumbördelung, was später anhand Fig. 3 noch näher erläutert wird. Während der zweite Zangenschenkel 30 mit dem Aufnahmeelement 11 in Verbindung steht, ist der erste Frontabschnitt 22 des ersten Zangenschenkels 20 nicht fest mit dem Aufnahmeelement 11 verbunden. Aufgrund der hohen Hitzeentwicklung sind die Endbereiche der ersten und zweiten Zangenschenkel 20, 30 mit einem hitzebeständigen Kunststoff überzogen (nicht dargestellt).

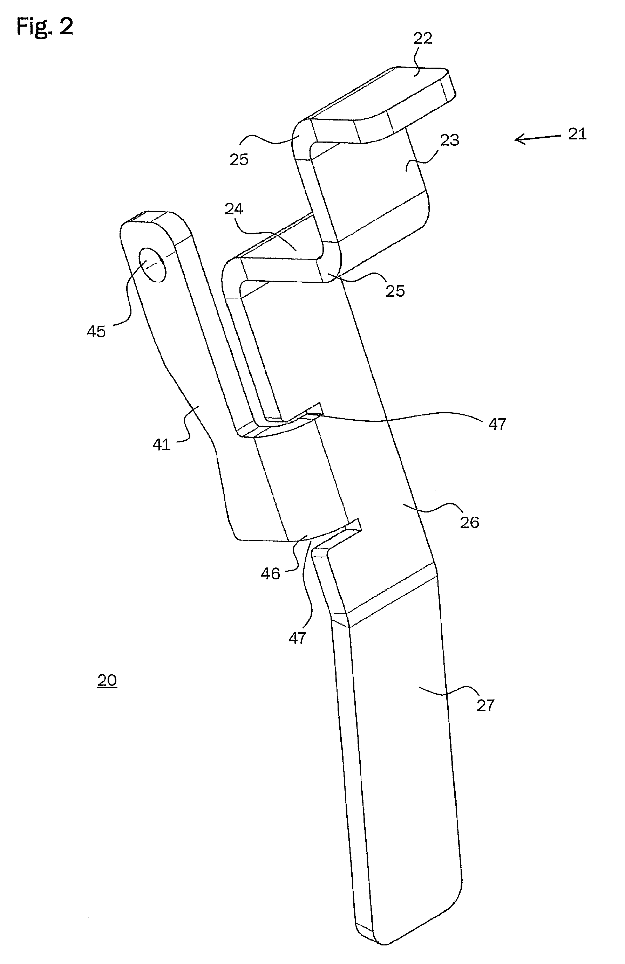

Der Aufbau des in den Fig. 1A und 1B gezeigten Ausführungsbeispiels des ersten Zangenschenkels 20 ist in Fig. 2 nochmals in einer vergrößerten Darstellung gezeigt. Die in Fig. 2 gezeigte Biegung der Doppelkantung 21 ist derart, dass der erste Teilabschnitt im Wesentlichen senkrecht auf dem zweiten Teilabschnitt 23 steht und dieser wiederum im Wesentlichen senkrecht auf dem dritten Teilabschnitt 24 steht, der wiederum im Wesentlichen senkrecht auf dem Teilabschnitt 16 steht. Die Erfindung ist jedoch nicht auf diese senkrechte Biegungen beschränkt, sondern kann auch hiervon abweichende Doppelkantformen aufweisen, bis hin zu einer Z-förmigen Doppelkantung mit spitzeren Winkeln oder einer Doppelkantung mit Winkeln über 90°, solange diese einen genügend großen Hohlraum 50 bilden, um etwaige Umbördelungen des Auspuffendrohres umgreifen zu können. Der mittlere Abschnitt 26 des ersten Zangenschenkels 20 weist zwei schlitzförmige Ausnehmungen 47 auf, um an dieser Stelle das Verbindungselement 41 zum Drehgelenk 45 nach unten zu biegen (gekrümmter Abschnitt 46). Die leichte Krümmung zwischen dem mittleren Abschnitt 26 und dem Endabschnitt 27 ermöglicht eine besonders ergonomische Griffhaltung der Klemmzange.

Fig. 3 illustriert schematisch das Ausführungsbeispiel der erfindungsgemäßen Abgassonde im geklemmten Zustand an einem Auspuffendrohr 60, das eine Umbördelung 61 an seinem Endbereich aufweist. Aufgrund der Doppelkantung 21 ist es möglich, die untere Umbördelung 61 zu umgreifen, so dass diese sich im geklemmten Zustand im Hohlraum 50 befindet. Im geklemmten Zustand wird der Teilabschnitt 22 aufgrund der Federwirkung der Klemmzange an die Unterseite des Auspuffendrohrs 60 gedrückt. Über das Aufnahmeelement 11 kann dann das Abgassondenrohr 10 auf die gewünschte Eindringtiefe in das Auspuffendrohr 60 eingeschoben werden. Nach Ende der Abgasmessung kann durch einfaches Zusammendrücken der Abgassonde die Klemmverbindung gelöst werden, um die Abgassonde wieder aus dem Auspuffrohr herauszuziehen. Das Befestigen und Lösen der Abgassonde kann daher auch einhändig erfolgen.

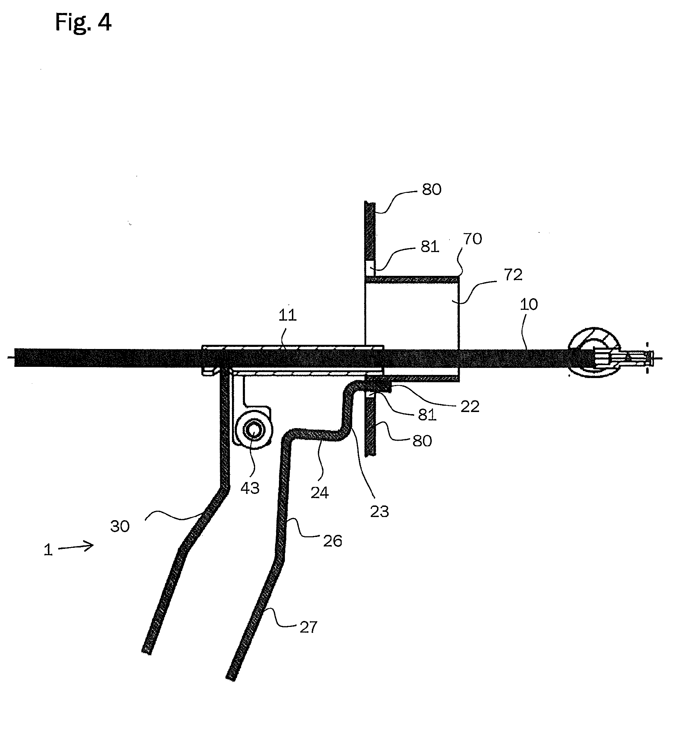

Fig. 4 illustriert schematisch ein Ausführungsbeispiel der erfindungsgemäßen Abgassonde im geklemmten Zustand an einem Auspuffrohr 70, das von einer Umkleidung 80 umgeben ist. Der vordere Teilabschnitt 22 kann in den Zwischenraum 81 zwischen Auspuffverkleidung 80 und Auspuffendrohr 70 eindringen und dort an die Unterseite des Auspuffrohrs 70 geklemmt werden. Mit anderen Worten drückt der untere Teilabschnitt 22 von unten gegen das Auspuffrohr, während die Klemmwirkung der Klemmzange das Auspuffendrohr 10 im Auspuff 70 nach unten drückt so dass eine feste Klemmverbindung zustande kommt.

Die einzelnen Merkmale der Erfindung sind selbstverständlich nicht auf die beschriebenen Kombinationen von Merkmalen im Rahmen der vorgestellten Ausführungsbeispiele beschränkt und können in Abhängigkeit vorgegebener Vorrichtungsparameter auch in anderen Kombinationen eingesetzt werden. Insbesondere ist die erfindungsgemäße Klemmzange nicht auf die beschriebenen Ausführungsbeispiele beschränkt. Weitere Ausgestaltungen der Klemmzange, insbesondere bezüglich der Materialien oder Formgebung, sind möglich, solange ein Zangenschenkel in seinem vorderen Bereich die erfindungsgemäße Doppelkantung aufweist.

## Patentansprüche

1. Abgassonde zur Bestimmung von Abgaskomponenten im Abgas von Verbrennungsmotoren, umfassend
ein Abgassondenrohr (10); und
eine Klemmzange mit einem ersten (20) und einem zweiten (30) Zangenschenkel zur Befestigung der Abgassonde (1) an einem Auspuffendrohr (60, 70), wobei der erste Zangenschenkel (20) einen zweifach gekanteten Frontabschnitt (21) aufweist.

2. Abgassonde nach Anspruch 1, **dadurch gekennzeichnet, dass** der zweifach gekantete Frontabschnitt (21) stufenförmig ausgebildet ist.

3. Abgassonde nach Anspruch 1 oder 2, **dadurch gekennzeichnet, dass** der zweifach gekantete Frontabschnitt (21) mit dem Abgassondenrohr (10) und einem Frontabschnitt (31) des zweiten Zangenschenkels (30) einen Hohlraum (50) bildet und einen ersten Teilabschnitt (22) umfasst, der im geklemmten Zustand in Kontakt mit dem Auspuffendrohr (60, 70) steht und parallel zur Längsachse des Abgassondenrohrs (10) verläuft.

4. Abgassonde nach Anspruch 3, **dadurch gekennzeichnet, dass** der zweifach gekantete Frontabschnitt (21) einen zweiten Teilabschnitt (23) umfasst, der im Wesentlichen senkrecht an den ersten Teilabschnitt (22) anschließt.

5. Abgassonde nach Anspruch 4, **dadurch gekennzeichnet, dass** der zweifach gekantete Frontabschnitt (21) einen dritten Teilabschnitt (24) umfasst, der im Wesentlichen senkrecht zum zweiten (23) und im Wesentlichen parallel zum ersten (22) Teilabschnitt verläuft.

6. Abgassonde nach einem der Ansprüche 1 oder 3, **dadurch gekennzeichnet, dass** der zweifach gekantete Frontabschnitt Z-förmig ausgebildet ist.

7. Abgassonde nach zumindest einem der vorangehenden Ansprüche, **dadurch gekennzeichnet, dass** die ersten (20) und zweiten (30) Zangenschenkel durch Federwirkung gegeneinander verspannbar und drehgelenkig verbunden sind.

8. Abgassonde nach zumindest einem der vorangehenden Ansprüche, **dadurch gekennzeichnet, dass** der zweite Zangenschenkel (30) mit einem Aufnahmeelement in Verbindung steht und das Abgassondenrohr (10) biegsam ausgebildet ist und entlang seiner Längsrichtung beweglich in dem Aufnahmeelement gelagert ist.

9. Abgassonde nach Anspruch 8, **dadurch gekennzeichnet, dass** das Aufnahmeelement als Hohlzylinder (11) ausgebildet ist.

10. Abgassonde nach zumindest einem der vorangehenden Ansprüche, **dadurch gekennzeichnet, dass** der zweifach gekanteten Frontabschnitt (21) im geklemmten Zustand in Kontakt mit dem Auspuffendrohr (60, 70) steht.

11. Abgassonde nach zumindest einem der vorangehenden Ansprüche, **dadurch gekennzeichnet, dass** der erste (20) und zweite (30) Zangenschenkel als Blechbiegeteile ausgebildet sind.
